# EUROPÄISCHE PATENTSCHRIFT

(11) **EP 4 117 082 B1**
(45) Veröffentlichungstag und Bekanntmachung des Hinweises auf die Patenterteilung: **19.06.2024**
(21) Anmeldenummer: 22159899.8
(22) Anmeldetag: 03.03.2022
(51) Int. Cl.: H01M 10/42, H01M 10/48, H01R 13/627, H01R 13/635, H01R 13/703

(54) **KOPPLUNGSVORRICHTUNG**
COUPLING DEVICE
DISPOSITIF D'ACCOUPLEMENT

(30) Priorität: 23.03.2021 DE 102021107209
(43) Veröffentlichungstag der Anmeldung: 11.01.2023
(73) Patentinhaber: National Instruments Germany GmbH, 80339 München (DE)
(72) Erfinder: AUWEILER, Juergen, 85716 Unterschleißheim (DE)
(74) Vertreter: TBK

(56) Entgegenhaltungen:
- WO-A1-2020/145950
- WO-A1-2021/121914
- US-A1- 2013 193 923

## Beschreibung

### Gebiet der Erfindung

Die vorliegende Erfindung betrifft eine Kopplungsvorrichtung mit zwei Anschlussmodulen, die einen Anschluss bilden, beispielsweise einen Anschluss zur elektrischen Leistungsübertragung, sowie ein Kopplungssystem mit dieser.

### Stand der Technik

Prüfstände werden üblicherweise verwendet, um unterschiedliche Arten von Produkten unter kontrollierte Bedingungen zu setzen und Tests durchzuführen. Beispielsweise werden verschiedene Lasten und Lastkollektive an einem Prüfstand auf das Produkt aufgebracht, um das Verhalten des Produkts im täglichen Gebrauch oder in Extremsituationen abzubilden. Bei Produkten, die hohe Leistungen aufnehmen oder abgeben, ist der Prüfstand üblicherweise in einem gesondert für diesen Zweck eingerichteten Prüfstandsraum untergebracht. Beispiele für solche Produkte sind elektrische Motoren und deren Batterien, hydraulische Motoren und deren Pumpen oder Druckspeicher sowie pneumatische Motoren und deren Druckspeicher. Je nachdem, welche Produkte getestet werden, muss ein Prüfstandsraum über unterschiedliche Versorgungs- und Signalanschlüsse verfügen.

Für den Fall, dass beispielsweise Akkumulatoren (Batteriezellen, Batteriemodule, Batteriepacks) in dem Prüfstandsraum getestet werden sollen, ist es demnach erforderlich, dass die Akkumulatoren an eine Stromversorgung angeschlossen sind. Dies ist notwendig, um die Lade-/Entladebelastung abzubilden. In Abhängigkeit der Größe und Ausführungsart der Akkumulatoren ist eine Stromversorgung im Niederspannungsbereich (bis 1500 V) erforderlich. Dies gilt insbesondere, wenn die Akkumulatoren zum Einsatz für elektrisch betriebene Fahrzeuge verwendet werden (zum Beispiel BEV, PHEV). Für gewöhnlich ist dazu eine Stromversorgung in den Prüfstandsraum hinein notwendig, die für Spannungen bis 1500 V sowie Stromstärken bis 1000 A ausgelegt ist.

Nachdem in entsprechenden Prüfstandstests eine Vielzahl von Akkumulatoren nacheinander zu testen sind und eine große Anzahl von Tests durchgeführt werden muss, da üblicherweise jeder Akkumulator bzw. jeder Batteriepack vor einem Einsatz in einem elektrischen Fahrzeug getestet werden muss, ist eine große Anzahl von Prüfstandsräumen notwendig. Um die Beschickung von jedem Prüfstandsraum mit einem Testobjekt in kürzest möglicher Zeit zu erledigen, ist eine Kopplungsvorrichtung zur schnellen Kopplung und Entkopplung des Testobjekts an den bzw. von dem Prüfstand wünschenswert.

Im Stand der Technik sind bisher verschiedene Ausführungen von Kopplungsvorrichtungen bekannt, die eine lösbare Kopplung zur Leistungsübertragung bereitstellen. Beispiele hierfür sind Steckverbinder für elektrische Leistungsübertragung sowie Schlauchkupplungen für pneumatische oder hydraulische Leistungsübertragung. Die Kopplung und Entkopplung erfolgen bei herkömmlichen Kopplungsvorrichtungen manuell oder durch eine Hilfskraft, beispielsweise durch ein pneumatisches oder hydraulisches Stellglied.

Wird eine herkömmliche Kopplungsvorrichtung für einen Anschluss mit einem mobil vorgesehenen Testobjekt kombiniert, kann das Testobjekt schnell in den Prüfstandsraum gebracht und gekoppelt werden sowie nach einem Test schnell wieder entkoppelt und abtransportiert werden. Naturgemäß sind allerdings nicht alle Tests erfolgreich, sodass es in manchen Fällen zu Rauchentwicklung in dem Prüfstandsraum oder zu einem Brand kommen kann. In einem solchen Notfall wird automatisch oder durch eine Aufsichtsperson eine Nothaltvorrichtung ausgelöst, welche die Leistungsversorgung zu dem Testobjekt unterbricht und je nach Bedarf eine Brandlösch- oder Entrauchungsanlage aktiviert, Sicherheitspersonal alarmiert oder andere geeignete Maßnahmen auslöst.

Manuell betätigte Kopplungsvorrichtungen erfordern, dass das Sicherheitspersonal im Notfall neben dem Zugang zu dem Testobjekt auch einen Zugang zu der Kopplungsvorrichtung hat, um die Kopplung lösen und das Testobjekt entfernen zu können. Hilfskraftbetätigte Kopplungsvorrichtungen hingegen erfordern eine fortgesetzte Bereitstellung der Hilfskraft, sodass eine komplette Unterbrechung jeglicher Leistungsversorgung des Prüfstands verzögert oder verhindert wird. Zudem können hilfskraftbetätigte Kopplungsvorrichtungen bei einer unbeabsichtigten Betätigung während Montagearbeiten oder Wartungsabreiten den Monteur verletzen. Dementsprechend gibt es Verbesserungspotenzial hinsichtlich der Möglichkeit zur schnellen, zuverlässigen und automatisierbaren Entkopplung des Anschlusses in einem Notfall. Weitere Verbesserungspotenziale betreffen die Sicherheit während Montagearbeiten und Tests sowie das Vermeiden von Stillstandzeiten.

WO 2021 / 121 914 A1 gehört zum nachveröffentlichten Stand der Technik. US 2013 / 0 193 923 A1 und WO 2020 / 145 950 A1 gehören zum Stand der Technik, wobei US 2013 / 0 193 923 A1 als nächstliegender Stand der Technik betrachtet wird und eine Ladevorrichtung für Elektrofahrzeuge zeigt, die in der Lage ist, eine Lichtbogenentladung zu verhindern, wenn ein Stromversorgungsstecker und ein fahrzeugseitiger Stecker getrennt werden. Die Ladevorrichtung der US 2013 / 0 193 923 A1 ist mit Folgendem versehen: einem Stromversorgungsstecker zum Versorgen mit elektrischer Energie von außerhalb des Fahrzeugs; einem fahrzeugseitigen Stecker zum Verbinden mit dem Stromversorgungsstecker, der im Fahrzeug angeordnet ist; einer Feder zum Erzeugen einer Abstoßkraft in der Richtung, in welcher sich der Stromversorgungsstecker und der fahrzeugseitige Stecker trennen; und ein Eingriffsteil zum Erfassen des Trennens des Stromversorgungsstecker und des fahrzeugseitigen Stecker; wobei die Feder eine Abstoßkraft in der Richtung erzeugt, in der sich der Stromversorgungsstecker und der fahrzeugseitige Stecker voneinander trennen, wenn das Eingriffsteil erfasst, dass sich der Stromversorgungsstecker und der fahrzeugseitige Stecker getrennt haben.

### Zusammenfassung der Erfindung

Um die vorangehend genannten Probleme zu lösen, wird eine Kopplungsvorrichtung gemäß der vorliegenden Erfindung vorgeschlagen.

Die vorliegende Offenbarung sieht eine Kopplungsvorrichtung vor, die ein erstes Anschlussmodul und ein zweites Anschlussmodul aufweist, das mit dem ersten Anschlussmodul lösbar verbindbar ist. Das erste Anschlussmodul und das zweite Anschlussmodul bilden einen Anschluss. Die Kopplungsvorrichtung ist eingerichtet, eine Kopplungskraft aufzubringen, die eine Verbindung zwischen dem ersten Anschlussmodul und dem zweiten Anschlussmodul erzeugt, und eine Entkopplungskraft aufzubringen, die die Verbindung löst. Die Entkopplungskraft und die Kopplungskraft werden von dem ersten Anschlussmodul auf das zweite Anschlussmodul aufgebracht, wobei die Entkopplungskraft der Kopplungskraft entgegenwirkt.

Die Kopplungsvorrichtung gemäß der vorliegenden Erfindung hat zwei Anschlussmodule, um einen Anschluss zu verwirklichen. Der Anschluss kann beispielsweise ein Anschluss zur elektrischen Leistungsübertragung sein, der an einem Prüfstand dazu dient, Testobjekte an den Prüfstandsraum zu koppeln bzw. davon zu entkoppeln. In einem solchen Fall sind die Anschlussmodule beispielsweise eine Kombination aus einem Buchsenmodul und einem Steckmodul. Alternativ kann der Anschluss zur hydraulischen oder pneumatischen Leistungsübertragung dienen, wobei die Anschlussmodule beispielsweise Schlauchkupplungen sind. Um die Anschlussmodule miteinander zu verbinden bzw. zu koppeln, wird eine Kopplungskraft von dem ersten Anschlussmodul, das prüfstandseitig vorgesehen ist, auf das zweite Anschlussmodul, das testobjektseitig vorgesehen ist, aufgebracht. Um die Kopplung wieder zu lösen und die Anschlussmodule voneinander zu trennen bzw. zu entkoppeln, wird auf gleiche Weise eine Entkopplungskraft aufgebracht.

Erfindungsgemäß wirkt die Entkopplungskraft der Kopplungskraft entgegen. Somit muss die Kopplungskraft die Entkopplungskraft überwinden, um die Kopplung aufrechtzuerhalten. Wenn die Kopplungskraft nicht mehr anliegt, beispielsweise da eine Nothaltvorrichtung aktiviert wurde, kann die Entkopplungskraft daher die Kopplung automatisch lösen und dadurch das zweite Anschlussmodul (und somit das Testobjekt) von dem ersten Anschlussmodul (und somit dem Prüfstand) entkoppeln. Demgemäß kann die Entkopplung des Anschlusses mithilfe der Entkopplungskraft automatisch erfolgen, sobald die Bereitstellung der Kopplungskraft unterbrochen wird.

Wie einleitend beschrieben, sind gemäß dem Stand der Technik entweder ein Zugang zu dem Anschluss oder eine fortgesetzte Bereitstellung einer Hilfskraft erforderlich, um die Kopplung zu lösen. Mit der Kopplungsvorrichtung der vorliegenden Erfindung ist es hingegen möglich, die Entkopplung allein durch die Unterbrechung der Bereitstellung der Kopplungskraft auszulösen. Somit ist eine Entkopplung durch das Sicherheitspersonal oder mittels einer Hilfskraft nicht erforderlich. Dadurch wird eine schnelle, zuverlässige und automatisierbare Entkopplung des Anschlusses in einem Notfall ermöglicht, was die Notfallsicherheit verbessert.

Die Kopplungskraft wird durch ein pneumatisches, hydraulisches, elektrisches oder elektromagnetisches Stellglied bereitgestellt, das an dem ersten Anschlussmodul vorgesehen ist.

Erfindungsgemäß kann die Bereitstellung der Kopplungskraft durch ein Stellglied realisiert werden, das an dem ersten Anschlussmodul und somit prüfstandseitig vorgesehen ist. Daher kann das häufig ausgetauschte zweite Anschlussmodul einen einfachen Aufbau aufweisen, während der komplexere Aufbau zur Kraftbereitstellung nur einmalig am ersten Anschlussmodul vorzusehen ist, das fest mit dem Prüfstandsraum verbunden ist. Ferner sind die vorgenannten Stellglieder vorteilhaft hinsichtlich ihrer Steuerbarkeit sowie günstig in der Beschaffung.

Falls ein pneumatisches Stellglied vorgesehen ist, kann die Kopplungskraft mit kürzesten Reaktionszeiten aufgebracht oder zurückgenommen werden. Ferner ist in Prüfstandsräumen häufig eine Druckluftleitung bereits vorhanden, sodass das pneumatische Stellglied keine gesonderte Pumpe oder andere Vorrichtung zur Druckerzeugung benötigt. In einem solchen Fall ist ein kostengünstiger Aufbau möglich.

Falls ein hydraulisches Stellglied vorgesehen ist, können sehr hohe Kopplungskräfte aufgebracht werden. Da höhere Leistungen in der Regel größere Anschlussmodule und somit höhere Kopplungskräfte erfordern, ist es mit einem hydraulischen Stellglied möglich, Anschlüsse für die Übertragung von sehr hohen Leistungen umzusetzen. Zudem weisen hydraulische Stellglieder einen geringen Platzbedarf auf, womit ein platzsparender Aufbau möglich ist.

Falls ein elektrisches oder elektromagnetisches Stellglied vorgesehen ist, wird der Aufbau dahingehend vereinfacht, dass keine Einrichtung zur Druckerzeugung erforderlich ist, was zudem den Platzbedarf reduziert.

Ferner kann die Bereitstellung der Kopplungskraft an der Bereitstellung der Leistung für den Anschluss gekoppelt sein, sodass die Unterbrechung der Leistungsversorgung automatisch auch die Bereitstellung der Kopplungskraft unterbricht. Somit ist ein Abschaltvorgang ausreichend, um die Leistungsversorgung an das Testobjekt sowie die Bereitstellung der Kopplungskraft zu unterbrechen und damit die Anschlussmodule mittels der entgegenwirkenden Entkopplungskraft entkoppeln zu können. Dadurch wird die Notfallsicherheit weiter verbessert.

Es ist zudem möglich, mehrere Wirkprinzipien des Stellglieds zu kombinieren, beispielsweise ein elektromagnetisch betätigtes Stellglied, das eine pneumatische Kraft erzeugt und im stromlosen Zustand den Betätigungsdruck ablässt und somit die Krafterzeugung unterbricht. Somit können die vorgenannten Vorteile in Kombination erzielt werden.

Die Entkopplungskraft wird durch eine mechanische, elektrostatische oder magnetische Speichervorrichtung bereitgestellt, die einen Teil der durch die Kopplungskraft erbrachte Energie aufnehmen, speichern und abgeben kann.

Die Speichervorrichtung nach den vorstehend genannten Wirkprinzipien ermöglicht eine passive Bereitstellung der Entkopplungskraft. Genauer gesagt kann die zur Entkopplung erforderliche Energie bereits während des Kopplungsvorgangs durch die Kopplungskraft aufgebracht und gespeichert werden. Unmittelbar nach der Unterbrechung der Bereitstellung der Kopplungskraft kann diese Energie wieder abgegeben werden, sodass die Entkopplungskraft auf vollständig passive Weise für eine ausreichende Dauer aufgebracht werden kann, um die Anschlussmodule zu entkoppeln. Demgemäß kann die so eingerichtete Kopplungsvorrichtung eine Entkopplung passiv durchführen und eine zusätzliche Hilfskraft oder eine aktive Bereitstellung der Entkopplungskraft sind nicht erforderlich. Damit wird die Notfallsicherheit weiter verbessert.

Falls die Speichervorrichtung eine mechanische Speichervorrichtung ist, beispielsweise eine Feder, ist der Aufbau besonders kostengünstig und zuverlässig. Alternativ kann die Speichervorrichtung auf elektrostatische oder magnetische Weise mittels Abstoßkräften potenzielle Energie speichern, beispielsweise indem gleichgeladene Platten oder Magnete, deren gleiche Pole zueinander gerichtet sind, an jedem der Anschlussmodule vorgesehen sind. Damit wird die passive Wirkung verschleißfrei erzielt.

Die Kopplungskraft wird durch einen Kopplungsmechanismus bereitgestellt, und die Entkopplungskraft wird durch einen Entkopplungsmechanismus bereitgestellt, der mit dem Kopplungsmechanismus eine Einheit bildet.

Sind der Kopplungsmechanismus und der Entkopplungsmechanismus als eine Einheit gebildet, können sie platzsparend untergebracht werden. Ferner kann die so entstandene Einheit kostengünstig vormontiert werden, sodass sie an dem Prüfstand schnell montiert bzw. ausgetauscht werden kann, beispielsweise wenn der Anschluss gewartet wird oder ein anderer Anschluss montiert wird. Damit werden Stillstandzeiten reduziert.

Bei der erfindungsgemäßen Kopplungsvorrichtung hat das zweite Anschlussmodul einen Eingriffsabschnitt, und das erste Anschlussmodul hat eine Eingriffseinheit, die mit dem Eingriffsabschnitt derart zusammenwirkt, dass die Eingriffseinheit zwischen einer Ausrichtposition, in welcher das zweite Anschlussmodul an das erste Anschlussmodul ausgerichtet ist und von dem ersten Anschlussmodul abnehmbar ist, und einer Verriegelungsposition beweglich ist, in welcher das zweite Anschlussmodul an das erste Anschlussmodul ausgerichtet ist und ein Abnehmen des zweiten Anschlussmoduls von dem ersten Anschlussmodul verhindert wird.

Erfindungsgemäß weist das erste Anschlussmodul eine Eingriffseinheit auf, die mit einem Eingriffsabschnitt des zweiten Anschlussmoduls in Eingriff kommt und damit zusammenwirkt, um einen ausgerichteten Zustand und einen verriegelten Zustand umzusetzen, wobei eine Ausrichtposition der Eingriffseinheit dem ausgerichteten Zustand der Kopplungsvorrichtung entspricht und eine Verriegelungsposition der Eingriffseinheit dem verriegelten Zustand der Kopplungsvorrichtung entspricht. In dem ausgerichteten Zustand sind die Anschlussmodule aneinander ausgerichtet, während das zweite Anschlussmodul abnehmbar ist und keine Leistungsübertragung stattfindet. In dem verriegelten Zustand sind die Anschlussmodule ausgerichtet, während das zweite Anschlussmodul verriegelt ist, sodass es nicht in der Entkopplungsrichtung von dem ersten Anschlussmodul abgenommen werden kann. Durch das Ausrichten kann eine problemlose und leichtgängige Kopplung bzw. Entkopplung erfolgen. Durch das Verriegeln wird gewährleistet, dass das zweite Anschlussmodul nicht versehentlich abgenommen wird oder abfällt, wodurch die Sicherheit während Montagearbeiten an dem Prüfstand (Montagesicherheit) sowie die Sicherheit während des Testbetriebs verbessert werden.

Erfindungsgemäß besteht in der Ausrichtposition und in der Verriegelungsposition keine Verbindung zur Leistungsübertragung. Somit können die Montagearbeiten durchgeführt werden, während das zweite Anschlussmodul an dem ersten Anschlussmodul verriegelt ist oder daran ausgerichtet ist, dem zweiten Anschlussmodul jedoch keine Leistung zugeführt wird. Dadurch wird die Montagesicherheit gewährleistet und weiter verbessert.

Vorzugsweise wird die Kopplungskraft durch einen Wirkmechanismus bereitgestellt, der von dem Wirkmechanismus der Entkopplungskraft verschieden ist.

Die Kopplungskraft und die Entkopplungskraft können mittels verschiedener Wirkmechanismen mit verschiedenen, voneinander unabhängigen Leistungsversorgungen, Steuerungseinrichtungen und dergleichen bereitgestellt sein. Ein Beispiel ist die Kombination aus pneumatisch bereitgestellter Kopplungskraft (pneumatisches Stellglied) und mechanisch bereitgestellter Entkopplungskraft (Feder als passive Speichervorrichtung). Durch die Verwendung verschiedener Wirkmechanismen gibt es keine Wechselwirkung zwischen der Bereitstellung oder Unterbrechung der Kopplungskraft und der Bereitstellung der Entkopplungskraft. Demgemäß kann die Entkopplungskraft zuverlässig bereitgestellt oder bereitgehalten werden, womit die Notfallsicherheit weiter verbessert wird.

Vorzugsweise ist die Eingriffseinheit ferner zu einer Kopplungsposition hin beweglich, in welcher die Eingriffseinheit mit dem Eingriffsabschnitt im Eingriff steht und die Kopplungskraft durch den Eingriff auf das zweite Anschlussmodul aufgebracht wird, um das zweite Anschlussmodul in eine gekoppelte Position zu bewegen und es dort zu halten, sodass eine Verbindung zur Leistungsübertragung besteht.

Durch die Bewegung von der Verriegelungsposition zu der Kopplungsposition wird die Verbindung zur Leistungsübertragung hergestellt. Das Ergebnis ist ein gekoppelter Zustand. Da die Anschlussmodule korrekt aneinander ausgerichtet sind, können Übergänge von dem verriegelten Zustand zu dem gekoppelten Zustand und zurück schnell und ungehindert erfolgen. Dementsprechend kann das Schalten der Leistungsübertragung schnell und ungehindert erfolgen, und die Notfallsicherheit wird weiter verbessert.

Vorzugsweise ist das Stellglied ein elektrischer oder druckbetriebener Schwenkspannzylinder, der eine Stange aufweist, welche an ihrem distalen Ende die Eingriffseinheit hat, und die Eingriffseinheit ist durch den Schwenkspannzylinder zwischen der Ausrichtposition und der Verriegelungsposition verdrehbar und zwischen der Verriegelungsposition und der Kopplungsposition axial verschieblich.

Schwenkspannzylinder sind Komponenten, die in der Beschaffung günstig sind und platzsparend die vorstehend geforderten Funktionen darstellen können. Somit sind sie für die Kopplungsvorrichtung der vorliegenden Erfindung in hohem Maße geeignet. Für die Auswahl des Wirkprinzips des Schwenkspannzylinders gelten die vorstehend genannte Vorteile der verschiedenen Arten von Stellgliedern. Ein elektrischer Schwenkspannzylinder kann beispielsweise mittels einer elektrisch betriebener Gewindestange zur Axialbewegung und einer elektrisch betriebenen Vorrichtung zum Verdrehen umgesetzt sein, wodurch er besonders günstig an einer etwaigen elektrischen Leistungsübertragung des Anschlusses angeschlossen sein kann. Ein druckbetriebener (pneumatischer oder hydraulischer) Schwenkspannzylinder kann beispielsweise umgesetzt sein, indem ein Kolben in einem Druckzylinder mit Druck beaufschlagt wird, um eine Stange axial zu verschieben. Dabei kann eine geeignete Vorrichtung vorgesehen sein, um parallel zu der Axialbewegung oder an deren Ende eine Verdrehung zu erzeugen. Ein Beispiel für eine solche Vorrichtung ist eine spiralförmige Nut in der Stange und ein ortsfester Zapfen an dem Druckzylinder, wobei der Zapfen in die Nut eingreift. Mit einem solchen Aufbau wird durch die axiale Bewegung eine Verdrehung herbeigeführt.

Unabhängig von der Betätigungsart des Schwenkspannzylinders führt der Eingriffsabschnitt vorzugsweise eine entsprechende Verdrehung von der Ausrichtposition zu der Verriegelungsposition sowie eine Axialbewegung von der Verriegelungsposition zu der Kopplungsposition durch. Damit kann durch eine einzelne Betätigung des Schwenkspannzylinders der Eingriffsabschnitt alle drei Positionen in einer geeigneten Reihenfolge durchlaufen, um die Kopplung vorzunehmen. Somit wird die Kopplung schnell durchgeführt.

Vorzugsweise ist die Speichervorrichtung eine Feder, die in der Ausrichtposition entspannt oder vorgespannt und in der Kopplungsposition gespannt ist.

Federn sind verschleißarme, kostengünstige Bauteile, die mit hohem Wirkungsgrad Energie speichern und wieder abgeben können. Dadurch wird ein einfacher und kostengünstiger Aufbau umgesetzt. Vorzugsweise ist die Feder in der Ausrichtposition vorgespannt, um Gleitreibungsverluste auf dem Weg von der Ausrichtposition zu der Kopplungsposition auszugleichen. Alternativ kann die Feder in der Ausrichtposition entspannt sein, um die von dem Stellglied aufzubringenden Kräfte zu minimieren.

Vorzugsweise sind die Speichervorrichtung und das Stellglied so eingerichtet, dass die Energieabgabe der Speichervorrichtung oder das Entspannen der Feder eine Bewegung der Eingriffseinheit von der Kopplungsposition über die Verriegelungsposition bis zu der Ausrichtposition bewirken.

Mit dem vorstehenden Aufbau können alle Schritte zur Entkopplung auf passive Weise vorgenommen werden. Somit wird ein einfacher und kostengünstiger Aufbau ermöglicht, und die Sicherheit und Zuverlässigkeit der Entkopplung werden verbessert.

Vorzugsweise ist die vorangehende Kopplungsvorrichtung ferner mit einer Führungsvorrichtung zum Ausrichten des zweiten Anschlussmoduls an das erste Anschlussmodul vorgesehen.

Durch das Vorsehen einer Führungsvorrichtung ist keine manuelle Ausrichtung erforderlich, wodurch die Fehleranfälligkeit und Stillstandzeiten reduziert werden.

Vorzugsweise weist die Führungsvorrichtung eine Auflageplatte, die an dem ersten Anschlussmodul vorgesehen ist, und einen Auflagevorsprung auf, der an dem zweiten Anschlussmodul vorgesehen ist. Dabei liegt der Auflagevorsprung in der Ausrichtposition auf der Auflageplatte auf, um das zweite Anschlussmodul an das erste Anschlussmodul auszurichten.

Falls die Auflageplatte horizontal oder nahezu horizontal ist, wird das Eigengewicht des zweiten Anschlussmoduls genutzt, um es in Höhenrichtung an das erste Anschlussmodul auszurichten. Falls die Auflageplatte vertikal oder nahezu vertikal ist, wird das zweite Anschlussmodul in der horizontalen Ebene an das erste Anschlussmodul ausgerichtet. In beiden Fällen wird die Ausrichtung mit einem einfachen Aufbau erzielt. Durch mehrere Auflageplatten in unterschiedlichen Ebenen kann darüber hinaus die Ausrichtung verbessert werden.

Alternativ oder zusätzlich kann die Führungsvorrichtung ein Führungsloch, das an dem ersten Anschlussmodul vorgesehen ist, und einen Führungsstift aufweisen, der an dem zweiten Anschlussmodul vorgesehen ist. Dabei sind das Führungsloch und der Führungsstift eingerichtet, das zweite Anschlussmodul zwischen der Verriegelungsposition und der Kopplungsposition relativ zu dem ersten Anschlussmodul zu führen, sodass die ausgerichteten Anschlussmodule in der Kopplungsrichtung beweglich sind.

Mit dem vorstehenden Aufbau wird eine bessere und zuverlässige Ausrichtung auch während des Kopplungsvorgangs mit einfachen, kostengünstigen Mitteln erzielt. Zudem wird die Leichtgängigkeit und demgemäß die Entkopplungssicherheit verbessert.

Bei der vorangehenden Kopplungsvorrichtung können das erste Anschlussmodul und das zweite Anschlussmodul eingerichtet sein, elektrische Leistung zu übertragen und/oder ein elektrisches Signal zu übertragen und/oder ein druckbehaftetes Fluid zu übertragen.

Mit dem vorstehenden Aufbau können eine oder mehrere Übertragungen in einem Anschluss vorgesehen sein, wobei eine gemeinsame Kopplungsvorrichtung die Übertragung/Übertragungen koppeln und entkoppeln kann. Damit wird der Aufbau der Kopplungsvorrichtung trotzt verschiedener Übertragungen prüfstandseitig vereinheitlicht, wodurch die Flexibilität bei der Nutzung eines Prüfstandsraums verbessert wird. Durch einen flexiblen Austausch von Anschlussmodulen ohne Änderung an der Kopplungsvorrichtung werden Stillstandzeiten reduziert.

Die vorstehend beschriebene Kopplungsvorrichtung kann in einem Kopplungssystem vorgesehen sein, das ferner eine Nothaltvorrichtung aufweist, welche eingerichtet ist, bei einer Betätigung die Bereitstellung der Leistung an das erste Anschlussmodul zu unterbrechen und die Druckversorgung oder Energieversorgung des Stellglieds zu unterbrechen.

Mit dem vorstehenden Kopplungssystem führt eine einzelne Betätigung einer Nothaltvorrichtung zu einem Abschalten des Prüfstands bei gleichzeitiger Entkopplung des Anschlusses. Damit wird die Notfallsicherheit weiter verbessert.

Das vorstehende Kopplungssystem kann einen ersten Schalter, der die Bereitstellung der Leistung an das erste Anschlussmodul schaltet, und einen zweiten Schalter aufweisen, der die Druckversorgung oder Energieversorgung des Stellglieds schaltet.

Der erste Schalter kann die Leistungsversorgung aktivieren und deaktivieren, während der zweite Schalter mittels Steuerung des Stellglieds die Bereitstellung der Kopplungskraft und somit die Kopplung und Entkopplung steuern kann. Somit sind die Vorgänge zur Kopplung/Entkopplung und zur Bereitstellung/Unterbrechung der Leistungsübertragung voneinander unabhängig. Demgemäß kann das Testobjekt an den Prüfstand gekoppelt werden, ohne es mit Leistung zu versorgen, was die Montagesicherheit verbessert. Im Testbetrieb kann ferner die Leistung durch beide Schalter bedarfsgerecht zu- und abgeschaltet werden, beispielsweise kann während des Tests lediglich der erste Schalter betätigt werden, während zu Testbeginn und Testende der zweite Schalter betätigt wird. Somit ist gewährleistet, dass das Testobjekt außerhalb der Testzeiten nicht mit Leistung versorgt wird, wodurch selbst eine unbeabsichtigte Betätigung des ersten Schalters während der Montagearbeiten keine Gefahr für den Monteur zur Folge hat. Demgemäß wird die Montagesicherheit verbessert.

Bei dem vorstehenden Kopplungssystem kann die Kopplungsvorrichtung innerhalb eines Prüfstandsraums vorgesehen sein, der erste Schalter kann außerhalb des Prüfstandsraums vorgesehen sein, und der zweite Schalter kann so vorgesehen sein, dass er zum Ausschalten der Druckversorgung oder Energieversorgung von außerhalb des Prüfstandsraums betätigt werden kann und zum Einschalten der Druckversorgung oder Energieversorgung von innerhalb des Prüfstandsraums betätigt werden kann.

Mit dem vorstehenden Kopplungssystem kann der Monteur das Einschalten der Druckversorgung/Energieversorgung und somit die Kopplung auslösen, nachdem er sichergestellt hat, dass das Testobjekt ordnungsgemäß in dem Prüfstandsraum untergebracht ist und alle Sicherheitsvorkehrungen getroffen sind. Damit wird die Montagesicherheit verbessert. Ebenfalls vorteilhafterweise kann der zweite Schalter derart angeordnet sein, dass der Monteur den zweiten Schalter nicht betätigen kann, während er das zweite Anschlussmodul berührt. Somit ist ein Einklemmen des Monteurs durch die Kopplungsvorrichtung ausgeschlossen. Andererseits kann das Ausschalten der Druckversorgung/Energieversorgung und somit die Entkopplung auch von außerhalb des Prüfstandsraums erfolgen. Damit kann in einem Notfall eine Aufsichtsperson den ersten Schalter und den zweiten Schalter separat oder zusammen betätigen, um die Leistungsübertragung an das Testobjekt zu unterbrechen und zeitversetzt oder gleichzeitig den Anschluss zu entkoppeln. Eine Betätigung des zweiten Schalters durch das Sicherheitspersonal in dem Prüfstandsraum ist nicht erforderlich. Damit wird die Notfallsicherheit weiter verbessert.

### Kurzbeschreibung der Zeichnungen

Fig. 1 zeigt eine perspektivische Ansicht einer erfindungsgemäßen Kopplungsvorrichtung in einem ausgerichteten Zustand.
Fig. 2 zeigt eine perspektivische Ansicht der Kopplungsvorrichtung in einem gekoppelten Zustand.
Fig. 3 zeigt eine Vorderansicht der Kopplungsvorrichtung in dem ausgerichteten Zustand.
Fig. 4 zeigt eine Vorderansicht der Kopplungsvorrichtung in einem verriegelten Zustand.
Fig. 5 zeigt eine Draufsicht der Kopplungsvorrichtung in einem Ausgangszustand.
Fig. 6 zeigt eine Draufsicht der Kopplungsvorrichtung in dem gekoppelten Zustand.
Fig. 7 zeigt eine Seitenansicht entsprechend der Fig. 5.
Fig. 8 zeigt eine Seitenansicht entsprechend der Fig. 6.
Fig. 9 zeigt ein Kopplungssystem mit einem Prüfstandsraum und der erfindungsgemäßen Kopplungsvorrichtung.
Fig. 10A zeigt eine schematische Darstellung der erfindungsgemäßen Kopplungsvorrichtung.
Fig. 10B zeigt eine erste Modifikation der Kopplungsvorrichtung.
Fig. 10C zeigt eine zweite Modifikation der Kopplungsvorrichtung.
Fig. 10D zeigt eine dritte Modifikation der Kopplungsvorrichtung.

### Detaillierte Beschreibung des Ausführungsbeispiels

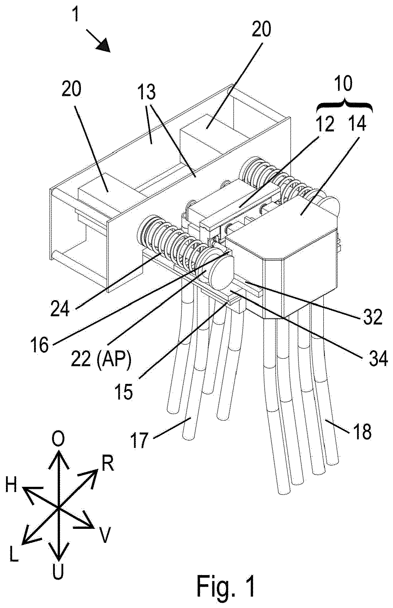

In Figs. 1 bis 8 ist ein Ausführungsbeispiel einer erfindungsgemäßen Kopplungsvorrichtung gezeigt. Eine Kopplungsvorrichtung 1 gemäß dem Ausführungsbeispiel ist an einer nicht dargestellten Wand in einem Prüfstandsraum 52 vorgesehen, um einen Batteriepack als ein Testobjekt 60 mit dem Prüfstandsraum 52 zu koppeln und einen Testbetrieb zu ermöglichen.

Richtungsangaben bei der nachfolgenden Beschreibung werden mit Bezug auf eine Normalenrichtung der Wand, an welcher die Kopplungsvorrichtung 1 angebracht ist, sowie auf eine Schwerkraftrichtung bestimmt. Eine Links-Rechts-Richtung ist die Richtung, die sowohl zu der Normalenrichtung als auch zu der Schwerkraftrichtung senkrecht steht. Ein Objekt oder Geometrieelement, das in der Normalenrichtung fern von der Wand ist, wird als "vorne" bezeichnet; ein Geometrieelement nah an der Wand wird als "hinten" bezeichnet. "Oben" und "unten" beziehen sich auf die Schwerkraftrichtung. Die Begriffe "links" und "rechts" werden bei der Betrachtung von vorne bestimmt (das heißt Blick auf die Wand betrachtet von dem Inneren des Prüfstandsraums aus entlang der Normalenrichtung). Zur Verdeutlichung sind in Fig. 1 bis 8 Richtungspfeile dargestellt und mit 0 = oben, U = unten, L = links, R = rechts, V = vorne und H = hinten gekennzeichnet. Bei dem Ausführungsbeispiel ist die Normalenrichtung zugleich die Kopplungsrichtung, entlang welcher ein später beschriebener Kopplungsvorgang durchgeführt wird.

### Anschlussmodule

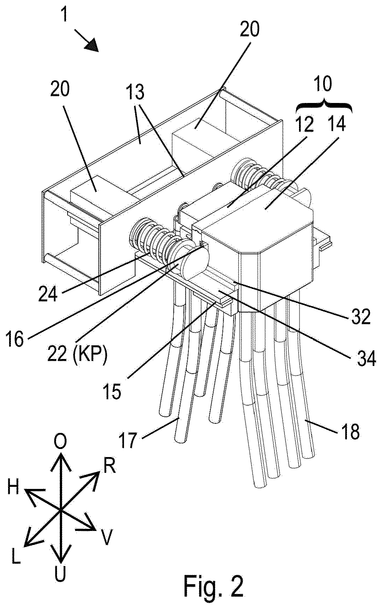

Die in Fig. 1 und 2 dargestellte Kopplungsvorrichtung 1 hat einen Leistungsanschluss 10 zur Stromübertragung, der als Anschluss dient und ein erstes Anschlussmodul 12 und ein zweites Anschlussmodul 14 hat.

Das erste Anschlussmodul 12 hat bei dem Ausführungsbeispiel ein Buchsenmodul, das Strom (elektrische Leistung) für den Testbetrieb bereitstellt. Das Buchsenmodul ist im Wesentlichen eine Metallplatte mit einer oder mehreren daran vorgesehenen Anschlussbuchsen. Die Anschlussbuchsen sind vorzugsweise modular austauschbar, sodass sie je nach Anforderungen des Testobjekts 60 bzw. des durchzuführenden Tests wahlweise Strom oder druckbehaftete Fluide bereitstellen und übertragen können. Das erste Anschlussmodul 12 hat ferner einen Rahmen 13, der an der Wand des Prüfstandsraums 52 angebracht ist. Der Rahmen 13 ist bei dem Ausführungsbeispiel als zwei parallele Platten mit mehreren Abstandshaltern gebildet, wovon eine an der Wand angebracht ist und die andere mit einem gewissen Abstand von der Wand absteht. Zwischen den Platten des Rahmens 13 sind zwei später beschriebene Stellglieder 20 angeordnet. Bei dem Ausführungsbeispiel hat der Rahmen 13 ferner zwei symmetrisch angeordnete Vorsprünge 15, die das Buchsenmodul von unten abstützen. Das Buchsenmodul kann von dem Rahmen 13 bzw. den Vorsprüngen 15 gelöst und ausgetauscht werden. Das Buchsenmodul ist ferner durch Verbindungsmittel 17, beispielsweise Kabel oder Schläuche, mit dem Prüfstandsraum 52 und entsprechenden Einrichtungen zur Leistungsbereitstellung und/oder Signalübertragung verbunden. Bei dem Ausführungsbeispiel sind vier Kabel als Verbindungsmittel 17 vorgesehen.

Das zweite Anschlussmodul 14 hat bei dem Ausführungsbeispiel einen im wesentlichen quadratischen Hauptkörper mit einem Steckermodul, das zu jeder Buchse des Buchsenmoduls einen passenden Stecker hat, welcher den durch das erste Anschlussmodul 12 bereitgestellten Strom abnimmt und durch vier Kabel 18 zu dem Testobjekt 60 leitet. Falls das erste Anschlussmodul 12 alternativ oder zusätzlich zur Übertragung von Strom zur Übertragung von Signalen oder druckbehafteten Fluiden eingerichtet ist, werden die zugehörigen Stecker und Kabel des zweiten Anschlussmoduls 14 entsprechend angepasst, um die Übertragung zu dem bzw. von dem Testobjekt 60 zu ermöglichen. Das zweite Anschlussmodul 14 hat mindestens einen Eingriffsabschnitt 16 und mindestens einen Auflagevorsprung 32. Bei dem Ausführungsbeispiel sind der Eingriffsabschnitt 16 und der Auflagevorsprung 32 als längliche Rippen ausgeführt. Auf der linken und rechten Seite des Hauptkörpers des zweiten Anschlussmoduls 14 sind jeweils ein Eingriffsabschnitt 16 und ein Auflagevorsprung 32 angeordnet, wobei der Eingriffsabschnitt 16 in der Schwerkraftrichtung verläuft und der Auflagevorsprung 32 in der Normalenrichtung verläuft. Diese Elemente werden später ausführlicher beschrieben.

### Stellglied und Eingiffseinheit

Bei dem Ausführungsbeispiel sind zwei Stellglieder 20 symmetrisch um den Mittelpunkt des ersten Anschlussmoduls 12 vorgesehen. Folgend wird lediglich das linke Stellglied 20 beschrieben, das rechte Stellglied 20 ist analog gestaltet.

Das Stellglied 20 ist bei dem Ausführungsbeispiel ein pneumatischer Schwenkspannzylinder, dessen Hauptkörper zwischen den zwei Platten des Rahmens 13 des ersten Anschlussmoduls 12 angeordnet ist. Von dem Hauptkörper des Stellglieds 20 ragt eine bewegliche Stange nach vorne vor, an deren Ende eine Eingriffseinheit 22 angebracht ist. Die Eingriffseinheit 22 ist ein Zylinder mit zwei konzentrischen, voneinander beabstandeten Kreisplatten. Die vordere Kreisplatte hat eine Aussparung in Form einer Kreissehne. Die hintere Kreisplatte hat die Aussparung nicht. Die Stange und somit die Eingriffseinheit 22 sind axial (das heißt in der Kopplungsrichtung) verschieblich und zudem um die Längsachse der Stange verdrehbar. Das Stellglied 20 und die Eingriffseinheit 22 bilden einen Kopplungsmechanismus.

Eine axiale Endposition der Eingriffseinheit 22 entspricht der ausgefahrenen Stellung des Stellglieds 20. In oder nahe dieser Endposition ist die Eingriffseinheit 22 verdrehbar. Bei dem Ausführungsbeispiel ist die Eingriffseinheit 22 in der Endposition und ohne Betätigung des Stellglieds 20 so verdreht, dass die Kreissehne der vorderen Kreisplatte in der Schwerkraftrichtung verläuft. Diese Position der Eingriffseinheit 22 wird als Ausrichtposition AP bezeichnet. In der Ausrichtposition AP sind die Aussparungen der vorderen Kreisplatten der rechten und linken Eingriffseinheiten 22 zueinander gerichtet, wobei der Abstand zwischen den Kreissehnen etwas größer ist als der Abstand zwischen den äußeren Kanten der zwei Eingriffsabschnitten 16. Somit folgt die Form jeder Aussparung der Form des dazugehörigen Eingriffsabschnitts 16 mit einem Versatz.

Eine anfängliche Betätigung des Stellglieds 20 hat zur Folge, dass die Eingriffseinheit 22 um 90° verdreht wird, wobei eine zusätzliche axiale Bewegung möglich ist. Diese Position der Eingriffseinheit 22 wird als Verriegelungsposition VP bezeichnet. Eine weiterführende Betätigung des Stellglieds 20 hat zur Folge, dass die Eingriffseinheit 22 bis zu einer anderen Endposition axial verschoben wird, wobei die Verdrehung der Verriegelungsposition VP aufrechterhalten bzw. beibehalten wird. Diese Position der Eingriffseinheit 22 wird als Kopplungsposition KP bezeichnet. Die Auswirkungen der verschiedenen Positionen AP, VP, KP wird später mit Bezug auf den Kopplungsvorgang beschrieben.

### Speichervorrichtung

Eine als Druckfeder ausgeführte Feder 24, die als eine Speichervorrichtung bzw. Energiespeichervorrichtung dient, ist konzentrisch mit der Stange des Stellglieds 20 um diese herum vorgesehen. Die Feder 24 liegt von hinten an der hinteren Kreisplatte an und spannt die Eingriffseinheit 22 nach vorne vor. Demgemäß drängt die Feder 24 die Eingriffseinheit 22 in Richtung der Ausrichtposition AP. Die Feder 24 als Speichervorrichtung ist somit zugleich ein Entkopplungsmechanismus, der bei dem Ausführungsbeispiel eine Einheit mit dem Kopplungsmechanismus (dem Stellglied 20 und der Eingriffseinheit 22) bildet. Jedoch ist es auch möglich, den Entkopplungsmechanismus (die Speichervorrichtung) anders als eine Feder zu gestalten und sie räumlich von dem Kopplungsmechanismus zu trennen, beispielsweise indem zwei Magnete mittig in den Anschlussmodulen 12, 14 vorgesehen sind und deren gleiche Pole zueinander gerichtet sind, sodass sich die Magnete und somit die Anschlussmodule 12, 14 gegenseitig abstoßen.

### Führungsvorrichtung

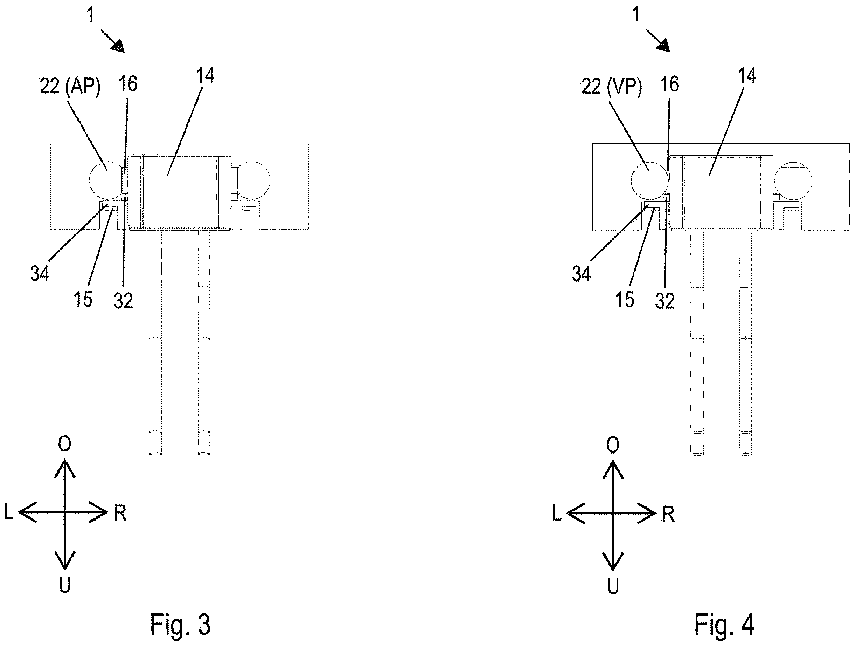

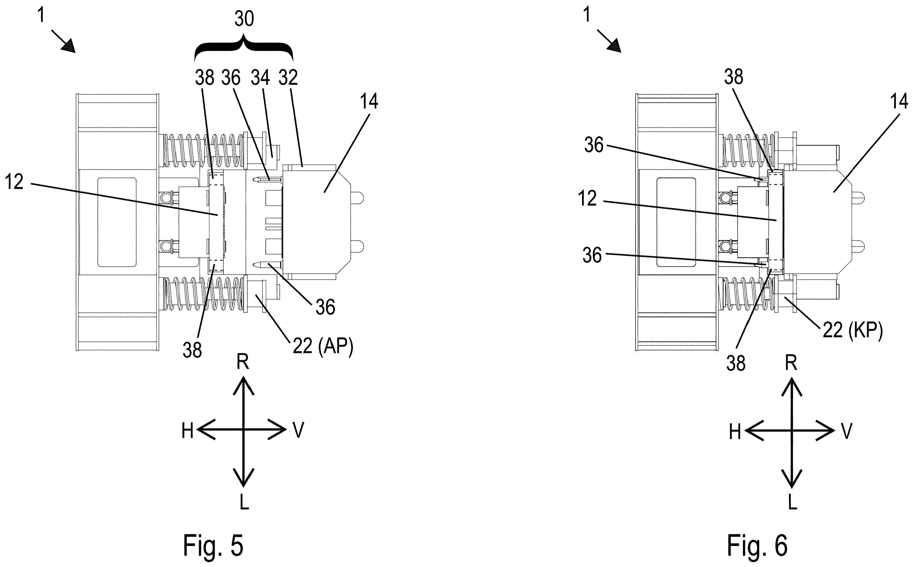

Die Kopplungsvorrichtung 1 hat ferner eine Führungsvorrichtung 30. Die Führungsvorrichtung 30 bei dem Ausführungsbeispiel umfasst die zwei vorstehend beschriebenen Auflagevorsprünge 32, die mit zwei Auflageplatten 34 gepaart sind (Fig. 3 und 4), sowie zwei Führungsstifte 36, die mit zwei Führungslöchern 38 gepaart sind (Fig. 5 und 6). Jedes dieser Bauteilpaare ist optional und verbessert die Leichtgängigkeit, Ausrichtung und Führung des zweiten Anschlussmoduls 14. Vorzugsweise ist bei jedem Bauteilpaar mindestens ein Element des Paars mit einem Schmiermittel behandelt, um die Leichtgängigkeit zu verbessern, oder wird durch die Kombination entsprechender Werkstoffpaarungen sichergestellt.

Die Auflageplatten 34 liegen jeweils auf den Vorsprüngen 15 auf und bieten jeweils eine erste Fläche, auf der der gegenüberliegende Auflagevorsprung 32 in der Schwerkraftrichtung aufliegen kann. Die erste Fläche ist eine obere Fläche in Fig. 3 und 4, sie verläuft horizontal und dient zum Führen des zweiten Anschlussmoduls 14 in der horizontalen Ebene. Zudem haben die Auflageplatten 34 jeweils eine zweite Fläche, die den Hauptkörper des zweiten Anschlussmoduls 14 kontaktieren kann und ihn in der Links-Rechts-Richtung ausrichten kann. Die zweite Fläche ist die Fläche der Auflageplatte 34, die in Fig. 3 und 4 vertikal verläuft und dem zweiten Anschlussmodul 14 zugewandt ist. Somit kann die zweite Fläche der linken Auflageplatte 34 in Fig. 3 und 4 die Bewegung des zweiten Anschlussmoduls 14 nach links begrenzen, und die zweite Fläche der rechten Auflageplatte 34 in Fig. 3 und 4 kann die Bewegung des zweiten Anschlussmoduls 14 nach rechts begrenzen. Der Abstand zwischen den zweiten Flächen der Auflageplatten 34 und die Breite des zweiten Anschlussmoduls 14 sind mit einem leichten Spiel gewählt, um ein spielarmes Gleiten des zweiten Anschlussmoduls 14 zu ermöglichen. Die Kombination aus erster und zweiter Fläche kann daher das zweite Anschlussmodul 14 an das erste Anschlussmodul 12 ausrichten und eine leichtgängige Bewegung in der Kopplungsrichtung gewährleisten.

Die Führungsstifte 36 sind an dem Steckermodul des zweiten Anschlussmoduls 14 vorgesehen und können mit einem leichten Spiel in die Führungslöcher 38, die gegenüber den Führungsstiften 36 in dem Buchsenmodul vorgesehen sind, hineinragen. Bei dem Ausführungsbeispiel ist die Länge der Führungsstifte 36 kürzer als der axiale Abstand zwischen der hinteren Kreisplatte der Eingriffseinheit 22 und dem vorderen Ende der Auflageplatte 34. Somit gibt es eine Position des zweiten Anschlussmoduls 14, in welcher das zweite Anschlussmodul 14 auf der Auflageplatte 34 aufliegt, ohne dass die Führungsstifte 36 und die Führungslöcher 38 ineinander eingreifen. Damit kann die Ausrichtung mithilfe der Auflageplatte 34 vor der genaueren Ausrichtung mit dem Führungsstift 36 erfolgen. Darüber hinaus haben die Führungsstifte 36 unterschiedliche Querschnitte. Der obere Führungsstift 36 in Fig. 5 hat einen Rautenquerschnitt, der untere Führungsstift 36 in Fig. 5 hat einen Kreisquerschnitt. Der Rautenquerschnitt (reduzierter Vollgreis) stellt sicher, dass aufgrund von möglichen Abstandstoleranzen der Führungsstifte ein Klemmen zuverlässig verhindert wird, und somit es zu keiner Funktionsstörung kommen kann.

### Ablauf der Kopplung

Mit dem vorstehend beschriebenen Aufbau ergibt sich ein beispielhafter Ablauf eines Kopplungsvorgangs, der folgend mit Verweis auf die Fig. 1 bis 8 beschrieben wird.

Zu Beginn ist das Testobjekt 60 in dem Prüfstandsraum 52 befindlich, ohne angeschlossen zu sein. Das Testobjekt 60 weist Kabel 18 auf, die es mit dem zweiten Anschlussmodul 14 verbinden, welches keinen Kontakt zu dem ersten Anschlussmodul 12 hat. Die Eingriffseinheit 22 des ersten Anschlussmoduls 12 ist in der Ausrichtposition AP. Beispielhaft ist dieser Zustand in Fig. 5 dargestellt.

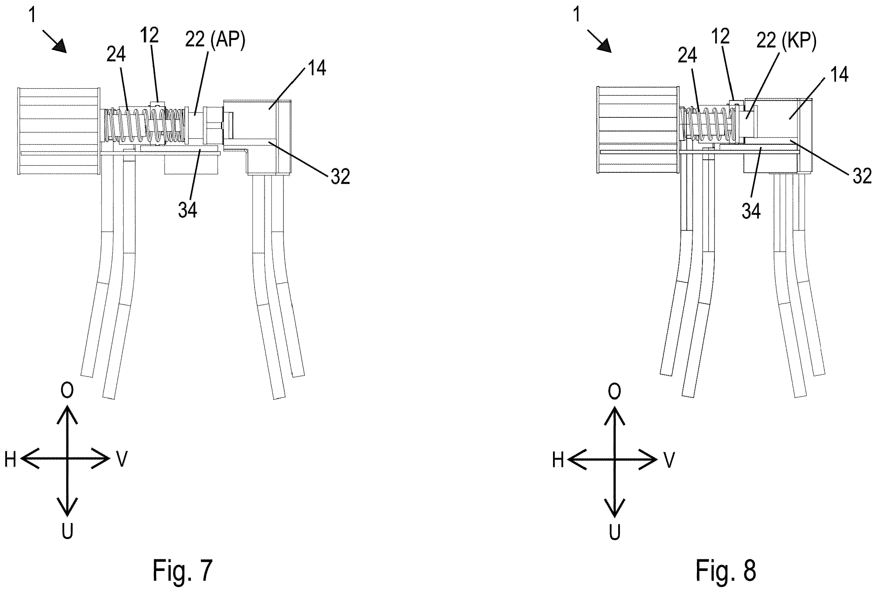

In einem Ausgangszustand für die Kopplung ist das zweite Anschlussmodul 14 durch einen Monteur an das erste Anschlussmodul 12 vorläufig ausgerichtet, nämlich auf die richtige Höhe (Fig. 7) und auf die richtige Position in der Links-Rechts-Richtung (Fig. 5).

In einem ersten Schritt wird das zweite Anschlussmodul 14 auf die Auflageplatten 34 des ersten Anschlussmoduls 12 aufgelegt und entlang der Kopplungsrichtung geschoben. Dabei wirken die Auflagevorsprünge 32 und der Hauptkörper des zweiten Anschlussmoduls 14 mit den Auflageplatten 34 und der Schwerkraft zusammen, um das zweite Anschlussmodul 14 in der Kopplungsrichtung zu führen. Die vordere Kreisplatte der Eingriffseinheit 22 hat die Aussparung, die der Form des Eingriffsabschnitts 16 mit einem Versatz folgt, um es dem zweiten Anschlussmodul 14 ausgehend von dem Ausgangszustand zu ermöglichen, entlang der Kopplungsrichtung geschoben zu werden. Somit passiert der Eingriffsabschnitt 16 des zweiten Anschlussmoduls 14 durch die Aussparung, bevor er mit der hinteren Kreisplatte der Eingriffseinheit 22 in Anlage gelangt. Am Ende der Bewegung liegen die Eingriffsabschnitte 16 des zweiten Anschlussmoduls 14 an den hinteren Kreisplatten der Eingriffseinheit 22 an. Dies entspricht dem ausgerichteten Zustand, in welchem das zweite Anschlussmodul 14 an dem ersten Anschlussmodul 12 ausgerichtet ist und von dem ersten Anschlussmodul 12 abnehmbar ist. Die Längen der Stecker des zweiten Anschlussmoduls 14 ist derweil so gewählt, dass die Stecker in dem ausgerichteten Zustand das Buchsenmodul nicht erreichen und somit keine Leistungsübertragung stattfinden kann. Es können zudem voreilende Kontakte beispielsweise für eine Schirmung/Erdung verwendet werden.

In einem nächsten Schritt erfolgt eine anfängliche Betätigung des Stellglieds 20. Die anfängliche Betätigung hat eine Verdrehung der Eingriffseinheit 22 zur Folge, sodass die Aussparung der vorderen Kreisplatte um 90° verdreht wird (siehe Fig. 4 gegenüber Fig. 3) und die Eingriffseinheit 22 die Verriegelungsposition VP einnimmt. Entsprechend blockiert die vordere Kreisplatte nun das Passieren des Eingriffsabschnitts 16 des zweiten Anschlussmoduls 14. Demgemäß kann das zweite Anschlussmodul 14 nicht mehr durch verschieben entlang der Kopplungsrichtung von dem ersten Anschlussmodul 12 abgenommen werden.

Dies entspricht einem verriegelten Zustand, in welchem das zweite Anschlussmodul 14 an dem ersten Anschlussmodul 12 ausgerichtet ist, aber nicht von dem ersten Anschlussmodul 12 abnehmbar ist. Je nach Gestaltung des Stellglieds 20 kann keine oder nur eine geringe axiale Bewegung der Eingriffseinheit 22 stattfinden, sodass in dem verriegelten Zustand weiterhin keine Leistungsübertragung stattfinden kann.

In einem nächsten Schritt erfolgt eine weiterführende Betätigung des Stellglieds 20. Die weiterführende Betätigung hat eine axiale Verschiebung der Eingriffseinheit 22 in der Kopplungsrichtung sowie eine Kompression der Feder 24 zur Folge. Während der axialen Verschiebung der Eingriffseinheit 22 kommt dabei die vordere Kreisplatte mit der vorderen Seite des Eingriffsabschnitts 16 des zweiten Anschlussmoduls 14 in Anlage. Infolgedessen wird das zweite Anschlussmodul 14 durch die Eingriffseinheit 22 mit einer Kopplungskraft in die Kopplungsrichtung gedrängt und durch die Auflageplatten 34 geführt. Nach einem Teil des durch das zweite Anschlussmodul 14 axial zurückzulegenden Wegs ragen zudem die Führungsstifte 36 in die Führungslöcher 38 hinein, um das Steckermodul des zweiten Anschlussmoduls 14 noch genauer an das Buchsenmodul des ersten Anschlussmoduls 12 auszurichten und die Führungsgenauigkeit zu verbessern. Ab etwa der Hälfte des axial zurückzulegenden Wegs kommen die Stecker des Steckermoduls mit den Buchsen des Buchsenmoduls in Kontakt. Am Ende der Verschiebung nimmt die Eingriffseinheit 22 die Kopplungsposition KP ein, das zweite Anschlussmodul 14 hat eine entsprechende gekoppelte Position eingenommen, die Stecker und die Buchsen stehen in Kontakt, und eine Leistungsübertragung ist möglich. Dies entspricht einem gekoppelten Zustand und ist in Fig. 2, 6 und 8 dargestellt.

Solange die Kopplung erwünscht ist, wird die Betätigung des Stellglieds 20 in dem gekoppelten Zustand beibehalten. Damit wird die Kopplungskraft aufrechterhalten und die Eingriffseinheit 22 in der Kopplungsposition KP gehalten, sodass das zweite Anschlussmodul 14 in dem gekoppelten Zustand verbleibt.

### Ablauf der Entkopplung

Da die Feder 24 während der weiterführenden Betätigung des Stellglieds 20 komprimiert wurde, hat die Feder 24 einen Teil der durch das Stellglied 20 mittels der Kopplungskraft erbrachten Energie in Form von potenzieller Energie gespeichert. Entsprechend bringt die Feder 24 eine Entkopplungskraft auf die Eingriffseinheit 22 auf und drängt diese nach vorne, das heißt von der Kopplungsposition KP in Richtung der Ausrichtposition AP. Zudem ist die Feder 24 so ausgelegt, dass sie in der Ausrichtposition AP eine verbleibende Vorspannkraft auf die Eingriffseinheit 22 aufbringt. Diese Vorspannkraft dient dem Ausgleich von Gleitreibungsverlusten und beschleunigt zudem die Entkopplung.

Um das zweite Anschlussmodul 14 von dem ersten Anschlussmodul 12 zu entkoppeln, wird die Betätigung des Stellglieds 20 unterbrochen, indem die Druckversorgung oder elektrische Energieversorgung unterbrochen wird. Bei dem Ausführungsbeispiel ist das Stellglied 20 ein pneumatischer Schwenkspannzylinder, daher wird zu diesem Zweck die Druckluftversorgung unterbrochen.

Nach der Unterbrechung entfällt die Kopplungskraft, die der Entkopplungskraft entgegenwirkt und in der Kopplungsposition KP im Gleichgewicht mit der Entkopplungskraft stand. Demgemäß drängt nun die Entkopplungskraft das zweite Anschlussmodul 14 nach vorne und weg von dem ersten Anschlussmodul 12. Infolge der axialen Bewegung erreicht die Eingriffseinheit 22 daher die Verriegelungsposition VP und wird weiter axial verschoben. Durch den Aufbau des Stellglieds 20 wird zudem die Verdrehung der Eingriffseinheit 22 ausgelöst, sodass am Ende der axialen Bewegung die Eingriffseinheit 22 in der Ausrichtposition AP steht. Somit bewirkt das Entspannen der Feder 24 eine Bewegung der Eingriffseinheit 22 von der Kopplungsposition KP über die Verriegelungsposition VP bis zu der Ausrichtposition AP. Durch eine Trennung der Entkopplungsfunktion (Übergang von dem gekoppelten Zustand zu einem entkoppelten Zustand, hier dem verriegelten Zustand) von der Verriegelungsfunktion (Übergang von dem verriegelten Zustand zu dem ausgerichteten Zustand), das heißt durch einen aufeinanderfolgend gestalteten zeitlichen Ablauf von Entkopplung und Verriegelung, kann ein Herausschleudern des zweiten Anschlussmoduls 14 verhindert werden.

Da in der Ausrichtposition AP keine Leistungsübertragung möglich ist und das zweite Anschlussmodul 14 von dem ersten Anschlussmodul 12 abnehmbar ist, sind die Anschlussmodule 12, 14 somit entkoppelt.

### Kopplungssystem

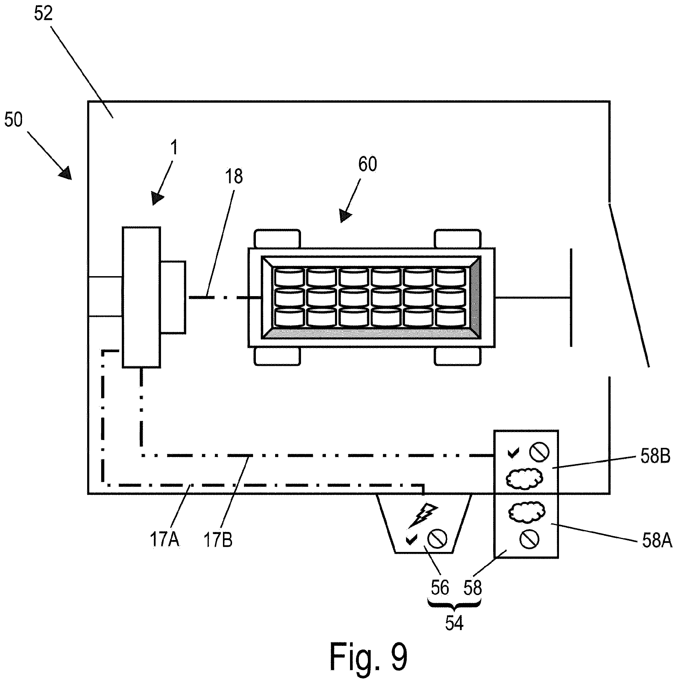

Fig. 9 zeigt schematisch ein Kopplungssystem 50, in welchem die Kopplungsvorrichtung 1 gemäß dem ersten Ausführungsbeispiel integriert ist.

Das Kopplungssystem 50 koppelt den Prüfstandsraum 52 mit dem Testobjekt 60. Das Testobjekt 60 ist ein Batteriepack mit einer Vielzahl von Batteriezellen für ein batteriebetriebenes elektrisches Fahrzeug (BEV) oder ein Plug-in-HybridFahrzeug (PHEV). Das Testobjekt 60 ist an einem Handwagen montiert, mit welchem es durch eine Tür in den Prüfstandsraum 52 hineingefahren werden kann und von dort zügig wieder entfernt werden kann, beispielsweise in einem Notfall. Der Prüfstandsraum 52 dient zum Testen des Testobjekts 60 unter realen Lastbedingungen, genauer gesagt um Lade- und Entladevorgänge zu simulieren.

Um das Testobjekt 60 für diese Vorgänge mit elektrischer Leistung zu versorgen, ist die Kopplungsvorrichtung 1 an einer Wand des Prüfstandsraums angebracht. Die Kopplungsvorrichtung 1 ist über Kabel 17A mit einem ersten Schalter 56 sowie mit einer Druckleitung 17B mit einem zweiten Schalter 58 verbunden. Die Druckleitung 17B stellt Druckluft zur Betätigung des Stellglieds 20 bereit, die Kabel 17A stelle elektrische Leistung für das Testobjekt 60 bereit. Die elektrische Leistung wird über die Kopplungsvorrichtung 1 zu Kabeln 18 übertragen, die sie zu dem Testobjekt 60 leiten.

Der erste Schalter 56 kann die Leistungsversorgung aktivieren und deaktivieren. Der zweite Schalter 58 kann die Druckversorgung des Stellglieds 20 schalten und somit mittels Steuerung des Stellglieds 20 die Kopplung und Entkopplung steuern. Der erste Schalter 56 und der zweite Schalter 58 können unabhängig voneinander betätigt werden. Daher sind die Vorgänge zur Kopplung/Entkopplung der Anschlussmodule 12, 14 und zur Bereitstellung/Unterbrechung der Leistungsübertragung voneinander unabhängig.

Der erste Schalter 56 ist außerhalb des Prüfstandsraums 52, beispielsweise in einer Warte, angebracht. Der zweite Schalter 58 hat einen Teil 58A, der außerhalb des Prüfstandsraums 52 angeordnet ist, und einen Teil 58B, der innerhalb des Prüfstandsraums 52 angeordnet ist. Der Teil 58A außerhalb des Prüfstandsraums 52 kann die Druckversorgung lediglich unterbrechen. Der Teil 58B innerhalb des Prüfstandsraums 52 kann die Druckversorgung sowohl unterbrechen als auch einschalten. Demgemäß kann nur ein Monteur innerhalb des Prüfstandsraums 52 die Anschlussmodule 12, 14 aneinanderkoppeln, während nur eine Aufsichtsperson außerhalb des Prüfstandsraums 52 die Leistungsbereitstellung einschalten kann. Somit ist das Kopplungssystem so eingerichtet, dass der verriegelte Zustand dauerhaft vorliegen kann, aber der gekoppelte Zustand nur dann herbeigeführt wird, wenn sich keine Personen in dem Prüfstandsraum befinden, womit die Montagesicherheit weiter verbessert wird. Ferner ist der Teil 58B des zweiten Schalters 58 ausreichend weit von der Kopplungsvorrichtung 1 entfernt, sodass der Monteur den Teil 58B des zweiten Schalters 58 nicht betätigen kann, während er das zweite Anschlussmodul 14 berührt. Damit muss der Monteur die Hände von dem zweiten Anschlussmodul 14 entfernen, um den Teil 58B des zweiten Schalters 58 zu betätigen und das Stellglied 20 zu betätigen, womit das Verletzungsrisiko reduziert wird. Der Monteur oder etwaiges Aufsichts- oder Sicherheitspersonal hingegen können die Anschlussmodule 12, 14 jederzeit mit einem beliebigen der Teile 58A und 58B entkoppeln, womit im Notfall eine schnelle Entkopplung und Entfernung des Testobjekts 60 von dem Prüfstandsraum 52 möglich sind.

Die beiden Schalter 56 und 58 sind Teil einer Nothaltvorrichtung 54, die so eingerichtet ist, dass eine Betätigung der Nothaltvorrichtung 54 die Unterbrechung beider Schalter 56 und 58 gleichzeitig bewirkt. Das bewirkt ein Abschalten des Prüfstands bei gleichzeitiger Entkopplung des Anschlusses. Eine einzelne Betätigung der einzelnen Schalter 56, 58 bleibt unabhängig davon ebenfalls möglich, um den Regelbetrieb und die Montagearbeiten besser steuern zu können.

### Modifikationen

Bei dem Ausführungsbeispiel sind zwei pneumatische Schwenkspannzylinder, nämlich je einer auf der linken und rechten Seite der Anschlussmodule 12, 14, als Stellglieder 20 vorgesehen. Andere Arten von Stellgliedern sind anwendbar, ihre Anzahl kann nach der Einbausituation, dem Kraftbedarf und der verfügbaren Betätigungsart angepasst werden.

Obwohl das Ausführungsbeispiel mit Hinblick auf elektrische Leistungsübertragung beschrieben wurde, kann die Kopplungsvorrichtung alternativ oder zusätzlich für eine pneumatische oder hydraulische Leistungsübertragung verwendet werden. Dazu werden die Anschlussmodule 12, 14 verändert, indem manche oder alle Kabel 17, 18 durch Schläuche sowie die dazugehörigen Buchsen bzw. Stecker durch Schlauchkupplungen ersetzt werden.

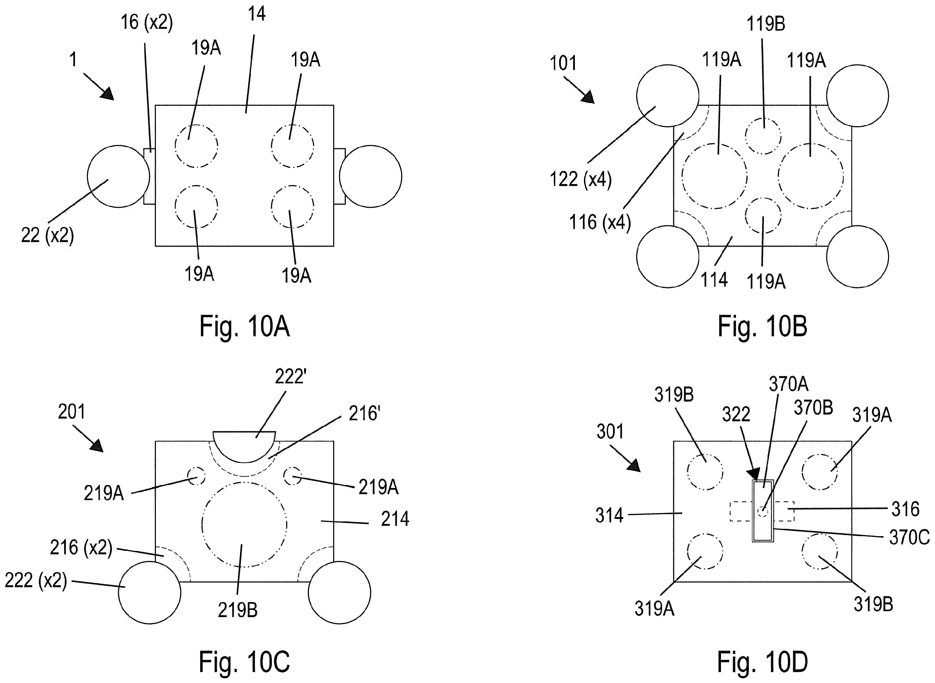

Fig. 10A zeigt die Kopplungsvorrichtung 1 des Ausführungsbeispiels in schematischer Darstellung bei der Ansicht von vorne. Das zweite Anschlussmodul 14 des ersten Ausführungsbeispiels hat aus schematischer Sicht vier Übertragungsteile 19, genauer gesagt vier elektrische Übertragungsteile 19A, die den bereits beschriebenen Buchsen und Steckern entsprechen. Ferner sind auf der linken und auf der rechten Seite jeweils eine Eingriffseinheit 22 des ersten Anschlussmoduls 12 und ein Eingriffsabschnitt 16 des zweiten Anschlussmoduls 14 vorgesehen, wobei jeder Eingriffsabschnitt 16 als eine Rippe ausgebildet ist. Die Aussparung der Eingriffseinheit 22 ist nicht dargestellt.

Fig. 10B bis 10D zeigen schematisch und nicht abschließend mögliche Modifikationen der Kopplungsvorrichtung. Alle Modifikationen weichen sowohl hinsichtlich der Anordnung der Stellglieder 20 als auch hinsichtlich der vorgesehenen Übertragungsteile von dem ersten Ausführungsbeispiel ab, wobei beide Abweichungsarten unabhängig voneinander sind und beliebig kombinierbar sind.

Eine erste Modifikation 101 in Fig. 10B hat eine Konfiguration, bei der insgesamt vier Eingriffseinheiten 122 vorgesehen sind - je eine an jeder Ecke des zweiten Anschlussmoduls 114. Damit können hohe Kopplungskräfte, beispielsweise für die Übertragung von hohen Strömen, umgesetzt werden. Die Eingriffsabschnitte 116 sind als Kontaktflächen bzw. Kontaktbereiche auf der vorderen Fläche des Hauptkörpers des zweiten Anschlusses 114 vorgesehen. Zwei Übertragungsteile 119A für die Übertragung von elektrischer Leistung (Strichpunktlinie) sind links und rechts vorgesehen. Zudem ist ein kleiner dimensioniertes Übertragungsteil 119A für eine Signalübertragung unten angeordnet und kann beispielsweise ein Messsignal übertragen. Darüber hinaus ist ein pneumatisches Übertragungsteil 119B (Strichzweipunktlinie) oben angeordnet und überträgt Druckluft, beispielsweise für eine Reinigungsdüse des Testobjekts 60.

Eine zweite Modifikation 201 in Fig. 10C hat eine Konfiguration, bei der drei Eingriffseinheiten vorgesehen sind - je eine Eingriffseinheit 222 an den unteren Ecken und eine Eingriffseinheit 222' mittig an dem oberen Rand des zweiten Anschlussmoduls 214. Damit können höhere Kopplungskräfte als bei dem Ausführungsbeispiel umgesetzt werden. Die obere Eingriffseinheit 222' ist lediglich als Halbkreisplatte ausgebildet. Damit wird weniger Platz als bei der ersten Modifikation benötigt. Die Eingriffsabschnitte 216, 216' sind jeweils Kontaktflächen auf der vorderen Fläche des zweiten Anschlussmoduls 214. Ein Übertragungsteil 219B überträgt hydraulische Leistung, und zwei elektrische Übertragungsteile 219A übertragen Messsignale.

Eine dritte Modifikation 301 in Fig. 10D hat eine Konfiguration, bei der nur eine Eingriffseinheit 322 mittig vorgesehen ist. Damit kann die Kopplungsvorrichtung mit einem einzigen Stellglied umgesetzt werden, was die Kosten und den Platzbedarf minimiert. Die Eingriffseinheit 322 ist als eine rechteckige Platte 370A ausgebildet, die um eine Mittelachse 370B drehbar ist und durch eine entsprechende Aussparung 370C in dem zweiten Anschlussmodul 314 durch das zweite Anschlussmodul 314 hindurchgeht. Der Eingriffsabschnitt 316 ist eine der Platte 370A entsprechende Auflagefläche auf der Vorderseite des zweiten Anschlussmoduls 314. Je zwei Übertragungsteile 319A, 319B für Strom und Druckluft sind in den vier Ecken des zweiten Anschlussmoduls 314 vorgesehen.

Bei dem Ausführungsbeispiel sind die anfängliche Betätigung und die weiterführende Betätigung des Stellglieds 20 eigenständig durchführbar. Die anfängliche Betätigung und die weiterführende Betätigung sind somit getrennte Betätigungen, die eine Trennung zwischen Verriegelungsposition und Kopplungsposition ermöglichen. Alternativ können die zwei Betätigungen als eine durchgehende Betätigung ausgeführt werden, sodass Verriegelung und Kopplung als ein ununterbrochener Vorgang durchführbar sind. Entsprechend wird der verriegelte Zustand ein Übergangszustand, und das zweite Anschlussmodul 14 ist zwischen einem ausgerichteten Zustand ohne Leistungsübertragung und einem gekoppelten Zustand mit Leistungsübertragung schaltbar. Ein solcher Aufbau ermöglicht den Einsatz eines einfachen und kostengünstigen Stellglieds und vermindert den Steuerungsaufwand.

Die ersten Flächen der zwei Auflageplatten 34 bei dem Ausführungsbeispiel sind bündig, und die Schwerkraft ermöglicht ein Aufliegen des zweiten Anschlussmoduls 14 und hält dieses somit in der horizontalen Ebene. Alternativ können mehrere erste Flächen von einer oder mehreren Auflageplatten 34 das zweite Anschlussmodul 14 in einer beliebigen Ebene oder entlang einer gekrümmten Fläche führen.

Das Ausführungsbeispiel wurde mit Bezug auf eine Normalenrichtung der Wand, an der die Kopplungsvorrichtung 1 angebracht ist, beschrieben, und die Normalenrichtung ist zugleich die Kopplungsrichtung. Jedoch muss die Kopplungsvorrichtung nicht an einer Wand angebracht sein, sondern kann beispielsweise freistehend auf einem Gestell angeordnet sein. Zudem können die Normalenrichtung und/oder die Kopplungsrichtung durch eine beliebige andere Referenzrichtung ersetzt werden, um je nach räumlichen Gegebenheiten auch ein schräges Koppeln der Anschlussmodule zu ermöglichen.

### Bezugszeichenliste

- 1: Kopplungsvorrichtung
100... erste Modifikation
200... zweite Modifikation
300... dritte Modifikation
- 10: Leistungsanschluss
- 12: erstes Anschlussmodul
- 13: Rahmen
- 14: zweites Anschlussmodul
- 15: Vorsprung
- 16: Eingriffsabschnitt
- 17: Verbindungsmittel
- 17A: Kabel
- 17B: Druckleitung
- 18: Kabel zum Testobjekt
- 19: Übertragungsteile
- 19A: elektrisches Übertragungsteil
- 19B: hydraulisches Übertragungsteil

- 20: Stellglied
- 22: Eingriffseinheit
AP Ausrichtposition
KP Kopplungsposition
VP Verriegelungsposition
- 24: Speichervorrichtung

- 30: Führungsvorrichtung
- 32: Auflagevorsprung
- 34: Auflageplatte
- 36: Führungsstift
- 38: Führungsloch

- 50: Kopplungssystem
- 52: Prüfstandsraum
- 54: Nothaltvorrichtung
- 56: erster Schalter
- 58: zweiter Schalter
- 58A: Außerhalb
- 58B: Innerhalb

- 60: Testobjekt

## Patentansprüche

1. Kopplungsvorrichtung (1) mit:
einem ersten Anschlussmodul (12), und
einem zweiten Anschlussmodul (14), das mit dem ersten Anschlussmodul (12) lösbar verbindbar ist;
wobei das erste Anschlussmodul (12) und das zweite Anschlussmodul (14) einen Anschluss (10) bilden,
wobei die Kopplungsvorrichtung (1) eingerichtet ist:
eine Kopplungskraft aufzubringen, die eine Verbindung zwischen dem ersten Anschlussmodul (12) und dem zweiten Anschlussmodul (14) erzeugt, und
eine Entkopplungskraft aufzubringen, die die Verbindung löst;
wobei
die Entkopplungskraft und die Kopplungskraft von dem ersten Anschlussmodul (12) auf das zweite Anschlussmodul (14) aufgebracht werden,
die Entkopplungskraft der Kopplungskraft entgegenwirkt,
die Kopplungskraft durch ein pneumatisches, hydraulisches, elektrisches oder elektromagnetisches Stellglied (20) bereitgestellt wird, das an dem ersten Anschlussmodul (12) vorgesehen ist,
die Entkopplungskraft durch eine mechanische, elektrostatische oder magnetische Speichervorrichtung (24) bereitgestellt wird, die einen Teil der durch die Kopplungskraft erbrachte Energie aufnehmen, speichern und abgeben kann,
die Kopplungskraft durch einen Kopplungsmechanismus bereitgestellt wird,
die Entkopplungskraft durch einen Entkopplungsmechanismus bereitgestellt wird,
der Entkopplungsmechanismus mit dem Kopplungsmechanismus eine Einheit bildet,
das zweite Anschlussmodul (14) einen Eingriffsabschnitt (16) hat,
das erste Anschlussmodul (12) eine Eingriffseinheit (22) hat, die mit dem Eingriffsabschnitt (16) derart zusammenwirkt, dass die Eingriffseinheit (22) zwischen folgenden Positionen beweglich ist:
einer Ausrichtposition (AP), in welcher das zweite Anschlussmodul (14) an das erste Anschlussmodul (12) ausgerichtet ist und von dem ersten Anschlussmodul (12) abnehmbar ist,
einer Verriegelungsposition (VP), in welcher das zweite Anschlussmodul (14) an das erste Anschlussmodul (12) ausgerichtet ist und ein Abnehmen des zweiten Anschlussmoduls (14) von dem ersten Anschlussmodul (12) verhindert wird, und
in der Ausrichtposition (AP) und in der Verriegelungsposition (VP) keine Verbindung zur Leistungsübertragung besteht.

2. Kopplungsvorrichtung (1) nach Anspruch 1, wobei
die Kopplungskraft durch einen Wirkmechanismus bereitgestellt wird, der verschieden ist von dem Wirkmechanismus der Entkopplungskraft.

3. Kopplungsvorrichtung (1) nach Anspruch 1, wobei
die Eingriffseinheit (22) ferner zu einer Kopplungsposition (KP) beweglich ist, in welcher die Eingriffseinheit (22) mit dem Eingriffsabschnitt (16) im Eingriff steht und die Kopplungskraft durch den Eingriff auf das zweite Anschlussmodul (14) aufgebracht wird, um das zweite Anschlussmodul (14) in eine gekoppelte Position zu bewegen und es dort zu halten, sodass eine Verbindung zur Leistungsübertragung besteht.

4. Kopplungsvorrichtung (1) nach Anspruch 3, wobei
das Stellglied (20) ein elektrischer oder druckbetriebener Schwenkspannzylinder ist, der eine Stange aufweist, welche an ihrem distalen Ende die Eingriffseinheit (22) hat, und
die Eingriffseinheit (22) durch den Schwenkspannzylinder zwischen der Ausrichtposition (AP) und der Verriegelungsposition (VP) verdrehbar ist und zwischen der Verriegelungsposition (VP) und der Kopplungsposition (KP) axial verschieblich ist.

5. Kopplungsvorrichtung (1) nach Anspruch 4, wobei
die Speichervorrichtung (24) eine Feder ist, die in der Ausrichtposition (AP) entspannt oder vorgespannt und in der Kopplungsposition (KP) gespannt ist.

6. Kopplungsvorrichtung (1) nach Anspruch 4 oder 5, wobei
die Speichervorrichtung (24) und das Stellglied (20) eingerichtet sind, sodass die Energieabgabe der Speichervorrichtung oder das Entspannen der Feder eine Bewegung der Eingriffseinheit (22) von der Kopplungsposition (KP) über die Verriegelungsposition (VP) bis zu der Ausrichtposition (AP) bewirkt.

7. Kopplungsvorrichtung (1) nach einem der vorangehenden Ansprüche, ferner mit einer Führungsvorrichtung (30) zum Ausrichten des zweiten Anschlussmoduls (14) an das erste Anschlussmodul (12).

8. Kopplungsvorrichtung (1) nach Anspruch 7, wobei die Führungsvorrichtung (30) Folgendes aufweist:
eine Auflageplatte (34), die an dem ersten Anschlussmodul (12) vorgesehen ist, und
einen Auflagevorsprung (32), der an dem zweiten Anschlussmodul (14) vorgesehen ist;
wobei der Auflagevorsprung (32) in der Ausrichtposition (AP) auf der Auflageplatte (34) aufliegt, um das zweite Anschlussmodul (14) an das erste Anschlussmodul (12) auszurichten.

9. Kopplungsvorrichtung (1) nach Anspruch 7 oder 8, wobei die Führungsvorrichtung (30) Folgendes aufweist:
ein Führungsloch (38), das an dem ersten Anschlussmodul (12) vorgesehen ist, und
einen Führungsstift (36), der an dem zweiten Anschlussmodul (14) vorgesehen ist;
wobei das Führungsloch (38) und der Führungsstift (36) eingerichtet sind, das zweite Anschlussmodul (14) zwischen der Verriegelungsposition (VP) und der Kopplungsposition (KP) relativ zu dem ersten Anschlussmodul (12) zu führen, sodass die ausgerichteten Anschlussmodule (12, 14) in der Kopplungsrichtung beweglich sind.

10. Kopplungsvorrichtung (1) nach einem der vorangehenden Ansprüche, wobei das erste Anschlussmodul (12) und das zweite Anschlussmodul (14) eingerichtet sind:
elektrische Leistung zu übertragen und/oder
ein elektrisches Signal zu übertragen und/oder
ein druckbehaftetes Fluid zu übertragen.

11. Kopplungssystem (50) mit
einer Kopplungsvorrichtung (1) nach einem der Ansprüche 4 bis 10,
einer Nothaltvorrichtung (54), welche eingerichtet ist, bei einer Betätigung die Bereitstellung der Leistung an das erste Anschlussmodul (12) zu unterbrechen und die Druckversorgung oder Energieversorgung des Stellglieds (20) zu unterbrechen.

12. Kopplungssystem (50) nach Anspruch 11, ferner mit:
einem ersten Schalter (56), der die Bereitstellung der Leistung an das erste Anschlussmodul (12) schaltet, und
einem zweiten Schalter (58), der die Druckversorgung oder Energieversorgung des Stellglieds (20) schaltet.

13. Kopplungssystem (50) nach Anspruch 12, wobei
die Kopplungsvorrichtung (1) innerhalb eines Prüfstandsraums (52) vorgesehen ist,
der erste Schalter (56) außerhalb des Prüfstandsraums (52) vorgesehen ist, und
der zweite Schalter (58) vorgesehen ist, sodass er zum Ausschalten der Druckversorgung oder Energieversorgung von außerhalb des Prüfstandsraums (52) betätigt werden kann und zum Einschalten der Druckversorgung oder Energieversorgung von innerhalb des Prüfstandsraums (52) betätigt werden kann.

## Claims

1. A coupling device (1) comprising:
a first connection module (12), and
a second connection module (14) releasably connectable to the first connection module (12);
wherein the first connection module (10) and the second connection module (14) form a connector (10),
wherein the coupling device (1) is adapted to:
apply a coupling force that creates a connection between the first connection module (12) and the second connection module (14), and
apply a decoupling force that releases the connection;
wherein
the decoupling force and the coupling force are applied by the first connection module (12) to the second connection module (14),
the decoupling force counteracts the coupling force,
the coupling force is provided by a pneumatic, hydraulic, electric, or electromagnetic actuator (20) provided on the first connection module (12),
the decoupling force is provided by a mechanical, electrostatic, or magnetic storage device (24) capable of receiving, storing, and releasing a portion of the energy generated by the coupling force,
the coupling force is provided by a coupling mechanism, and
the decoupling force is provided by a decoupling mechanism,
the decoupling mechanism forms a unit with the coupling mechanism,
the second connection module (14) has an engagement portion (16),
the first connection module (12) has an engagement unit (22) cooperating with the engagement portion (16) such that the engagement unit (22) is movable between the following positions:
an alignment position (AP) in which the second connection module (14) is aligned with the first connection module (12) and is removable from the first connection module (12),
a locking position (VP) in which the second connection module (14) is aligned with the first connection module (12) and is prevented from being removed from the first connection module (12); and
there is no connection for power transmission in the alignment position (AP) and in the locking position (VP).

2. The coupling device (1) according to claim 1, wherein
the coupling force is provided by an operating mechanism that is different from the operating mechanism of the decoupling force.

3. The coupling device (1) according to claim 1, wherein
the engagement unit (22) is further movable to a coupling position (KP) in which the engagement unit (22) is engaged with the engagement portion (16) and the coupling force is applied to the second connection module (14) by the engagement to move the second connection module (14) to a coupled position and hold it there so that there is a connection for power transmission.

4. The coupling device (1) according to claim 3, wherein
the actuator (20) is an electric or pressure operated swing clamp cylinder comprising a rod having the engagement unit (22) at its distal end, and
the engagement unit (22) is rotatable by the swing clamp cylinder between the alignment position (AP) and the locking position (VP) and is axially displaceable between the locking position (VP) and the coupling position (KP).

5. The coupling device (1) according to claim 4, wherein
the storage device (24) is a spring which is relaxed or preloaded in the alignment position (AP) and tensioned in the coupling position (KP).

6. The coupling device (1) according to claim 4 or 5, wherein
the storage device (24) and the actuator (20) are adapted so that the energy output of the storage device or the relaxing of the spring causes a movement of the engagement unit (22) from the coupling position (KP) via the locking position (VP) to the alignment position (AP).

7. The coupling device (1) according to any one of the preceding claims, further comprising a guiding device (30) for aligning the second connection module (14) with the first connection module (12).

8. The coupling device (1) according to claim 7, wherein the guiding device (30) comprises:
a support plate (34) provided on the first connection module (12); and
a support projection (32) provided on the second connection module (14);
wherein the support projection (32) rests on the support plate (34) in the alignment position (AP) to align the second connection module (14) with the first connection module (12).

9. The coupling device (1) according to claim 7 or 8, wherein the guiding device (30) comprises:
a guiding hole (38) provided on the first connection module (12); and
a guiding pin (36) provided on the second connection module (14);
wherein the guiding hole (38) and the guiding pin (36) are adapted to guide the second connection module (14) between the locking position (VP) and the coupling position (KP) relative to the first connection module (12) so that the aligned connection modules (12, 14) are movable in the coupling direction.

10. The coupling device (1) according to any one of the preceding claims, wherein the first connection module (12) and the second connection module (14) are adapted to transmit at least one of an electrical power, an electrical signal and a pressurized fluid.

11. A coupling system (50) comprising
a coupling device (1) according to any one of claims 4 to 10,
an emergency stop device (54) adapted to interrupt the provision of power to the first connection module (12) and to interrupt the pressure supply or energy supply to the actuator (20) when actuated.

12. The coupling system (50) according to claim 11, further comprising:
a first switch (56) that switches the provision of power to the first connection module (12); and
a second switch (58) that switches the pressure supply or energy supply to the actuator (20).

13. The coupling system (50) according to claim 12, wherein
the coupling device (1) is provided inside a test rig space (52),
the first switch (56) is provided outside the test rig space (52), and
the second switch (58) is provided so as to be operable to turn off the pressure supply or energy supply from outside the test rig space (52) and operable to turn on the pressure supply or energy supply from inside the test rig space (52).

## Revendications

1. Dispositif de couplage (1) avec :
un premier module de raccordement (12), et
un deuxième module de raccordement (14) qui peut être relié de manière amovible au premier module de raccordement (12) ;
dans lequel le premier module de raccordement (12) et le deuxième module de raccordement (14) forment un raccordement (10),
dans lequel le dispositif de couplage (1) est adapté :
pour appliquer une force de couplage qui crée une liaison entre le premier module de raccordement (12) et le deuxième module de raccordement (14), et
pour appliquer une force de découplage qui détache la liaison ;
dans lequel
la force de découplage et la force de couplage sont appliquées par le premier module de raccordement (12) au deuxième module de raccordement (14),
la force de découplage s'oppose à la force de couplage,
la force de couplage est fournie par un actionneur pneumatique, hydraulique, électrique ou électromagnétique (20) qui est prévu sur le premier module de raccordement (12),
la force de découplage est fournie par un dispositif de stockage mécanique, électrostatique ou magnétique (24) qui peut recevoir, stocker et libérer une partie de l'énergie fournie par la force de couplage,
la force de couplage est fournie par un mécanisme de couplage,
la force de découplage est fournie par un mécanisme de découplage,
le mécanisme de découplage forme une unité avec le mécanisme de couplage,
le deuxième module de raccordement (14) a une section d'engagement (16),
le premier module de raccordement (12) a une unité d'engagement (22) qui coopère avec la section d'engagement (16) de telle sorte que l'unité d'engagement (22) est mobile entre les positions suivantes :
une position d'alignement (AP) dans laquelle le deuxième module de raccordement (14) est aligné avec le premier module de raccordement (12) et peut être retiré du premier module de raccordement (12),
une position de verrouillage (VP) dans laquelle le deuxième module de raccordement (14) est aligné avec le premier module de raccordement (12) et un retrait du deuxième module de raccordement (14) du premier module de raccordement (12) est empêché, et
dans la position d'alignement (AP) et dans la position de verrouillage (VP), il n'y a pas de liaison pour la transmission de puissance.

2. Dispositif de couplage (1) selon la revendication 1, dans lequel
la force de couplage est fournie par un mécanisme d'action qui est différent du mécanisme d'action de la force de découplage.

3. Dispositif de couplage (1) selon la revendication 1, dans lequel
l'unité d'engagement (22) est en outre mobile vers une position de couplage (KP) dans laquelle l'unité d'engagement (22) est engagée avec la section d'engagement (16) et la force de couplage est appliquée au deuxième module de raccordement (14) par l'engagement afin de déplacer le deuxième module de raccordement (14) vers une position couplée et l'y maintenir de telle sorte qu'il existe une liaison pour la transmission de puissance.

4. Dispositif de couplage (1) selon la revendication 3, dans lequel
l'actionneur (20) est un cylindre de serrage pivotant actionné électriquement ou par pression, qui présente une tige ayant à son extrémité distale l'unité d'engagement (22), et
l'unité d'engagement (22) peut être tournée par le cylindre de serrage pivotant entre la position d'alignement (AP) et la position de verrouillage (VP) et peut être déplacée axialement entre la position de verrouillage (VP) et la position de couplage (KP).

5. Dispositif de couplage (1) selon la revendication 4, dans lequel
le dispositif de stockage (24) est un ressort qui est détendu ou précontraint dans la position d'alignement (AP) et tendu dans la position de couplage (KP).

6. Dispositif de couplage (1) selon la revendication 4 ou 5, dans lequel
le dispositif de stockage (24) et l'actionneur (20) sont adaptés de telle sorte que la sortie d'énergie du dispositif de stockage ou la détente du ressort provoque un mouvement de l'unité d'engagement (22) de la position de couplage (KP) à la position d'alignement (AP) par le biais de la position de verrouillage (VP).

7. Dispositif de couplage (1) selon l'une quelconque des revendications précédentes, avec en outre un dispositif de guidage (30) pour aligner le deuxième module de raccordement (14) avec le premier module de raccordement (12).

8. Dispositif de couplage (1) selon la revendication 7, dans lequel le dispositif de guidage (30) présente :
une plaque d'appui (34) prévue sur le premier module de raccordement (12), et
une saillie d'appui (32) prévue sur le deuxième module de raccordement (14) ;
la saillie d'appui (32) reposant sur la plaque d'appui (34) dans la position d'alignement (AP) afin d'aligner le deuxième module de raccordement (14) avec le premier module de raccordement (12).

9. Dispositif de couplage (1) selon la revendication 7 ou 8, dans lequel le dispositif de guidage (30) présente :
un trou de guidage (38) prévu sur le premier module de raccordement (12), et
une broche de guidage (36) prévue sur le deuxième module de raccordement (14) ;
dans lequel le trou de guidage (38) et la broche de guidage (36) sont adaptés pour guider le deuxième module de raccordement (14) entre la position de verrouillage (VP) et la position de couplage (KP) par rapport au premier module de raccordement (12) de telle sorte que les modules de raccordement alignés (12, 14) sont mobiles dans la direction de couplage.

10. Dispositif de couplage (1) selon l'une quelconque des revendications précédentes, dans lequel le premier module de raccordement (12) et le deuxième module de raccordement (14) sont adaptés :
pour transférer de la puissance électrique et/ou
pour transférer un signal électrique et/ou
pour transférer un fluide sous pression.

11. Système de couplage (50) avec
un dispositif de couplage (1) selon l'une quelconque des revendications 4 à 10,
un dispositif d'arrêt d'urgence (54) qui est adapté pour interrompre, en cas d'actionnement, la fourniture de la puissance au premier module de raccordement (12) et pour interrompre l'alimentation en pression ou en énergie de l'actionneur (20).

12. Système de couplage (50) selon la revendication 11, avec en outre :
un premier commutateur (56) qui commute la fourniture de la puissance au premier module de raccordement (12), et
un deuxième commutateur (58) qui commute l'alimentation en pression ou l'alimentation en énergie de l'actionneur (20).

13. Système de couplage (50) selon la revendication 12, dans lequel
le dispositif de couplage (1) est prévu à l'intérieur d'un espace de banc d'essai (52),
le premier commutateur (56) est prévu à l'extérieur de l'espace du banc d'essai (52), et
le deuxième commutateur (58) est prévu de telle sorte qu'il puisse être actionné pour couper l'alimentation en pression ou l'alimentation en énergie depuis l'extérieur de l'espace de banc d'essai (52) et qu'il puisse être actionné pour activer l'alimentation en pression ou l'alimentation en énergie depuis l'intérieur de l'espace de banc d'essai (52).
